# EUROPEAN PATENT APPLICATION

(11) **EP 2 824 331 A1**
(43) Date of publication of application: **14.01.2015**
(21) Application number: 12870657.9
(22) Date of filing: 07.03.2012
(51) Int. Cl.: F04D 29/32, F04D 29/38, F01D 5/14

(54) **FAN IMPELLERS AND METHOD FOR PRODUCING FAN IMPELLERS**

(71) Applicant: Talleres Zitrón, S.A., 33392 Gijón (Asturias) (ES)
(72) Inventor: ARIAS ÁLVAREZ, Roberto, 33392 Gijón (Asturias) (ES)
(74) Representative: Ungria López, Javier
(86) International application number: PCT/ES2012/070144
(87) International publication number: WO 2013/132113

(57) **Abstract**

The invention relates to impellers for fans and to a method for producing said impellers designed to install same in the fans that are located on the ceiling of road tunnels. They are made entirely from welded stainless steel with vanes manufactured by stamping. Said vanes are formed by two plates that correspond to the impeller surface and the suction surface, respectively, of the vane, leaving a hollow, in the process of production, in the interior of the vane thus reducing the weight of the impeller.

## Description

### OBJECT OF THE INVENTION

The present invention, as expressed in the wording of this specification, relates to a fan impeller and the method for producing said fan impellers. This type of impellers is especially designed to be installed in the fans that are located on the ceiling of road tunnels.

### BACKGROUND OF THE INVENTION

Impellers are currently produced by casting, the full impeller or only the vanes thereof being able to be produced in this manner. This method of production requires the submission in certain cases of the different pieces making up the impeller to different machining steps to ensure that the pieces fit correctly upon the assembly thereof.

The heavy weight of these impellers produced by casting must be taken into account, which increases the cost not only of the impeller itself but of the motors to which they are coupled, given that they have to move a larger mass. This, in turn, increases the cost of maintenance of the fans, given that the consumption of power also increases due to the greater weight of the impellers, which likewise affects the affixing means of the fan to the ceiling of the tunnels because they necessarily must be stronger.

### DESCRIPTION OF THE INVENTION

In order to achieve the objectives and avoid the inconveniences indicated above, the invention consists on an impeller for fans of the type installed on the ceiling of road tunnels and on the method for producing the impeller.

The impeller object of the present invention presents a completely new design, both constructively and in terms of its aerodynamic profile. The main innovation of the aforementioned impeller is the complete production thereof in welded stainless steel with vanes manufactured by stamping. This type of manufacturing minimizes potential defects in the assembly, which significantly eliminates the danger of imbalance that could take place due to the misalignment of the pieces of the impeller.

On the other hand, this type of construction significantly reduces the weight of the impeller, increasing with it the life of the motor.

The main advantage of this new design is the increase in efficiency. Efficiency increases, with which consumption, for the same propulsion, decreases.

The manufacturing of the new design is based on the transformation thereof into a single welded set, therefore becoming an integral piece. This eliminates the risk of imbalance due to the lack of alignment in the assembly of the different pieces forming the same. In addition, it prevents the potential subsequent misalignment of the pieces due to the joint attachment thereof through welding means.

All of the parts of the impeller are welded to each other, achieving a single set. This attachment of components provides security. The design of impellers consisting of several pieces implies a risk of imbalance. The pieces are balanced in a certain position: if this position changes due to spaces among the pieces or a defective assembly, the impeller will become imbalanced. This possibility does not exist in the welded set, given that the attachment among the pieces is a solid attachment.

The method for producing the impeller object of the present invention consists of several steps, one of the most important novelties being that the impeller is built entirely of steel, with an important reduction in weight with respect to steel impellers with solid vanes existing in the state of the art.

In the method for producing the impeller object of the present invention, the main innovation is carrying out the aerodynamic profile in a plate, formed by stamping, drawing, hydroforming, dieless forming or any of the processes used for the forming of steel plates.

Once the required aerodynamic profile is obtained by means of known calculations and depending on the current needs, the profiles are formed in a plate through any of the means provided above.

In the case of symmetrical profile vanes, two equal plates are formed to achieve one vane, the suction surface being equal to the impeller surface, such that two equal faces, facing each other, form one vane. In the case of asymmetrical profiles, the surfaces to be stamped are different and a different suction surface and a different impeller surface will be required, which, when faced, will form an asymmetrical profile.

Once these surfaces have been stamped and are facing each other, they are attached. This attachment is carried out by welding. The lateral and upper flanks of each plate are welded to one another. This welding does not only achieve the attachment of the surfaces; it also provides the set with the strength required for the work to be carried out.

After welding the surfaces of the vane and achieving the aerodynamic shape required, the vane is placed in the core of the impeller on the outer surface of the exterior enclosure. This placement is carried out by means of assembly elements positioning the vanes both in the placement in the core and in the established angle of contact.

Once the vanes have been placed on the outer enclosure in the appropriate position, they are welded, thereby forming a single piece.

This way, the fan impeller object of the present invention comprises the following elements:
- a central stump to which the impeller is affixed to the shaft of a motor;
- an exterior cylindrical enclosure located concentrically to the central stump;
- at least two attachment discs, the central stump and the exterior enclosure being attached by means of the affixing of an inner edge of each disc to the outer surface of the stump and the affixing of the outer edge of each disc to the inner surface of the outer enclosure; and
- a plurality of vanes affixed to the outer surface of the exterior enclosure and equidistantly located, the vanes being formed by at least two previously formed plates, which correspond to the impeller surface and the suction surface of the vane, being welded to each other along at least 3 of their edges, leaving a hollow space in their interior, and comprising that the vanes are welded along the lower open profile to the outer surface of the exterior enclosure.

In a particular embodiment of the invention, the impeller comprises that the plates are equal when the vane is symmetrical, and that the plates are different when the vane is asymmetrical.

In another particular embodiment of the invention, the impeller is made of stainless steel.

In another particular embodiment of the invention, the affixing of the central stump, the outer enclosure and the at least two attachment discs is carried out by welding.

The other object of the present invention comprises the method for producing a fan impeller, said impeller being of the type described above. The impellers shall be preferably located on the ceilings of road tunnels. The aforementioned method comprises at least the following steps:
i) calculating the dimensions of the outer enclosure, of the central stump, of the at least two attachment discs, the number of vanes and the aerodynamic profile of each vane depending on the needs required for each impeller;
ii) stamping at least two plates, giving both plates a concave shape to form each vane;
iii) welding the at least two plates along their upper end and along their lateral ends, leaving a hollow space in the interior of the welded volume of the vane;
iv) placing the vanes on the outer surface of the exterior enclosure by means of assembly elements equidistantly positioning the vanes; and
v) welding each one of the vanes along their lower edge to the outer surface of the exterior enclosure of the impeller.

In a particular embodiment of the method described above, in step iii) an intermediate piece is used in the welding of the upper ends of both plates.

In another particular embodiment of the invention, the assembly elements are selected among positioners, templates, and a combination thereof.

### BRIEF DESCRIPTION OF THE DRAWINGS

Figure 1.- Shows a general view of the impeller object of the present invention.
Figure 2.- Shows an exploded view of the impeller shown in figure 1.
Figure 3.- Shows an upper view of a particular embodiment of the vane object of the invention.
Figure 4.- Shows an upper view of a particular embodiment of a vane after being affixed to the outer enclosure of the impeller.
Figure 5.- Shows a lateral view of a particular embodiment of a vane object of the invention.
Figure 6.- Shows an exploded view of the vane of figure 4.

### DESCRIPTION OF SEVERAL EXAMPLES OF EMBODIMENT OF THE

### INVENTION

A description of several examples of embodiment of the invention, in an illustrative rather than limitative manner, shall be made below, with reference to the numbering adopted in the figures.

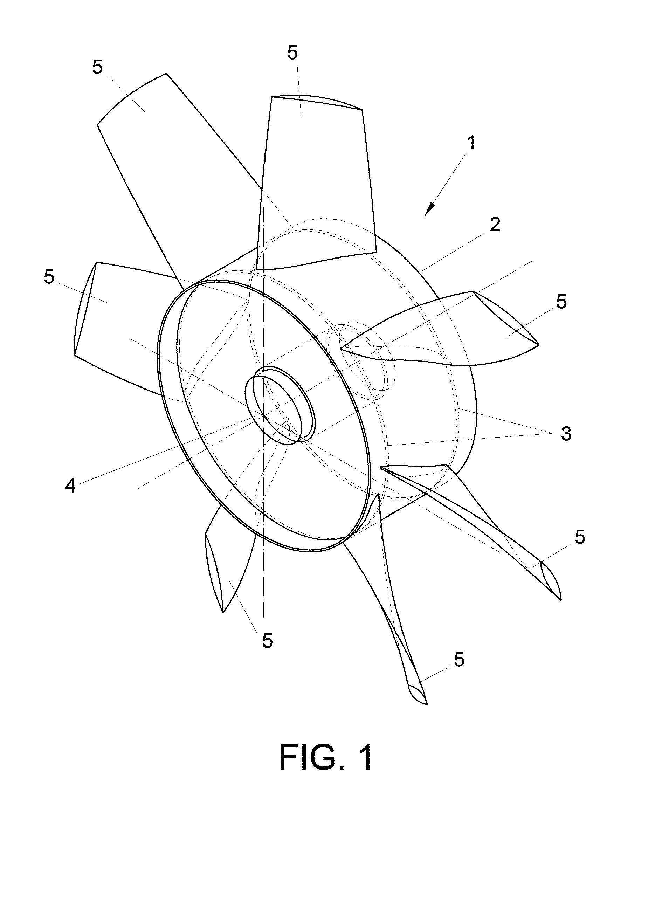

The impeller (1) is mainly formed by one core and a plurality of vanes (5). Figure 1 shows a general perspective view of a particular embodiment of an impeller object of the present invention. It should be noted that the number of vanes, as well as the arrangement thereof on the outer enclosure of the impeller and the morphology itself and dimensions of the vanes can vary depending on the needs required each time (mainly the volume of air to be cleared, electric power supplied to the fan, etc.).

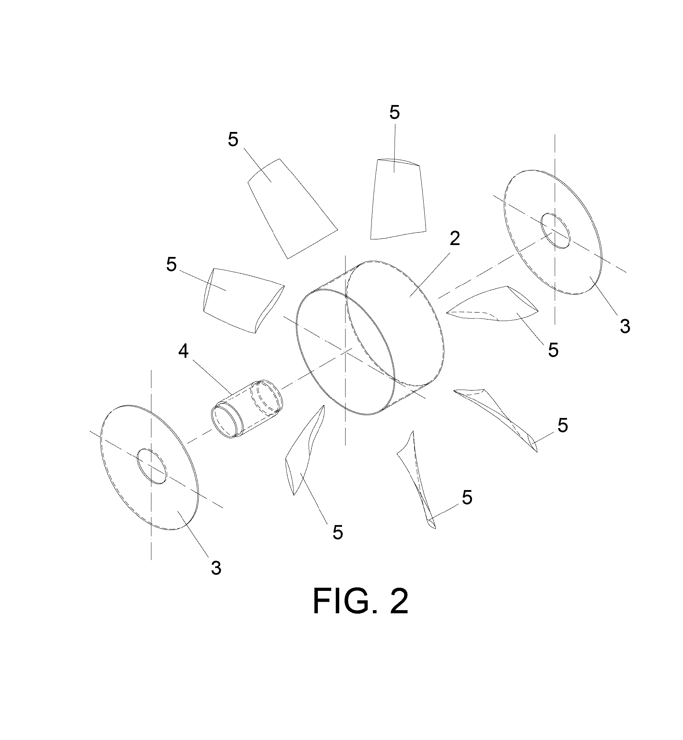

Figure 2 shows an exploded view of the impeller of figure 1, clearly showing the core of the impeller composed of an outer enclosure (2), to which two inner discs (3) are welded. These discs provide rigidity to the enclosure, thereby preventing deformations in the same. A central stump (4) is welded in these discs (3), which shall be the attachment element between the impeller (1) and the motor. In order to achieve a perfect attachment between the impeller (1) and the motor, the stump (4) is mechanized with the housing required by the shaft of the motor, that is to say, the stump (4) will have a diameter that will depend on the diameter of the shaft of the motor.

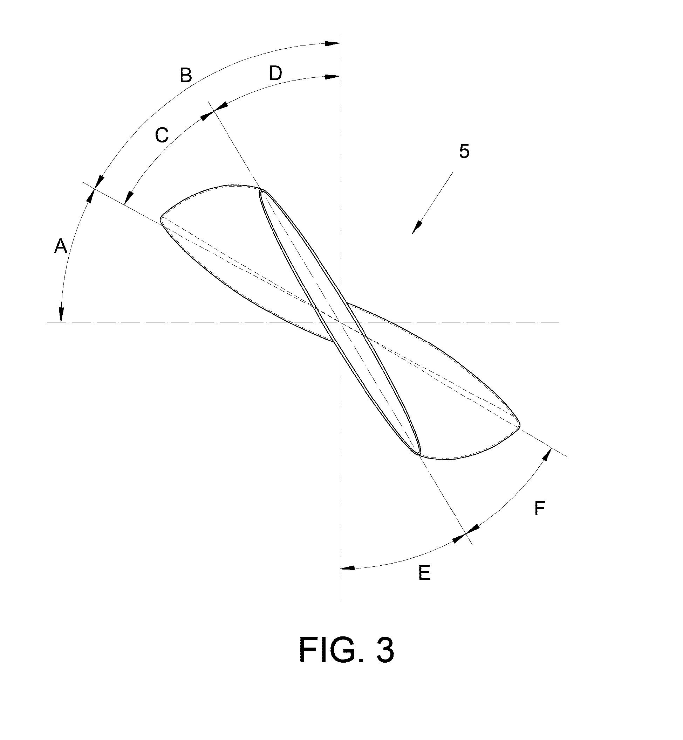

Figure 3 shows an upper view of a particular embodiment of a vane (5) object of the present invention. A, B, C, D, E, and F being different angular distances between different points of the impeller.

In a more particular embodiment of the invention, these dimensions would be: A: 28.8°, B: 61.2°, C: 30.8°, D: 30.4°, E: 30° and F: 29°. These dimensions are for a specific embodiment of the impeller, and they may vary depending on the current constructive needs.

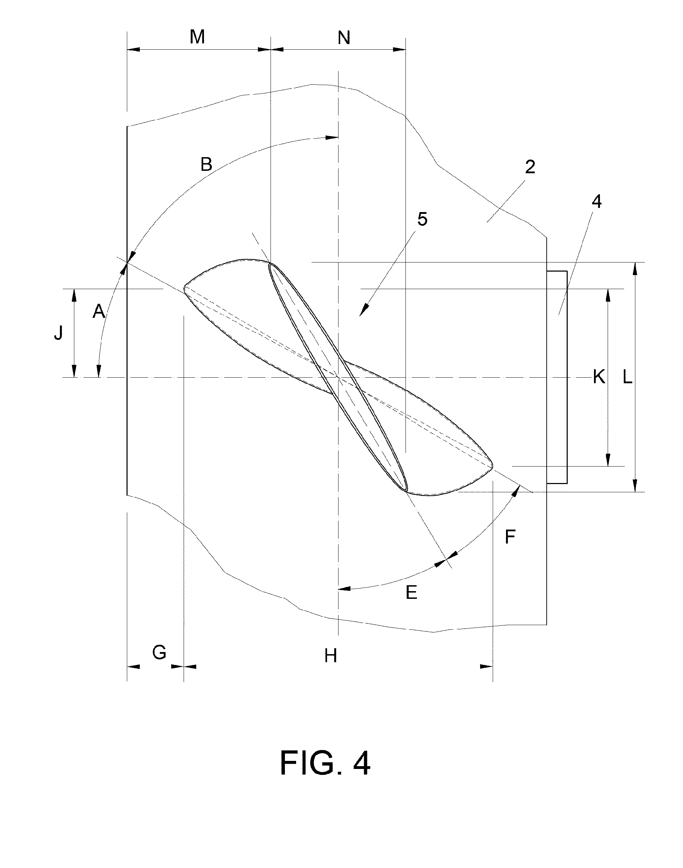

Figure 4 shows the vane (5) arranged on the outer enclosure (2) of the core of the impeller, K being the inner diameter of the stump (4), H the length of the base of the vane (5) (base being understood as the profile of the vane (5) welded to the enclosure (2)) on the horizontal axis, G the distance from the edge of the enclosure (2) to the end of the base of the vane (5), N the length of the cover of the vane (cover being understood as the intermediate piece of the welding of the upper end of the vane (5)) on the horizontal axis, L the length of the cover of the vane (5) on the vertical axis, J the distance between the center of the vane (5) and the end of the base of the vane on the vertical axis and M the distance between the edge of the enclosure (2) and the end of the cover of the vane (5) on the horizontal axis.

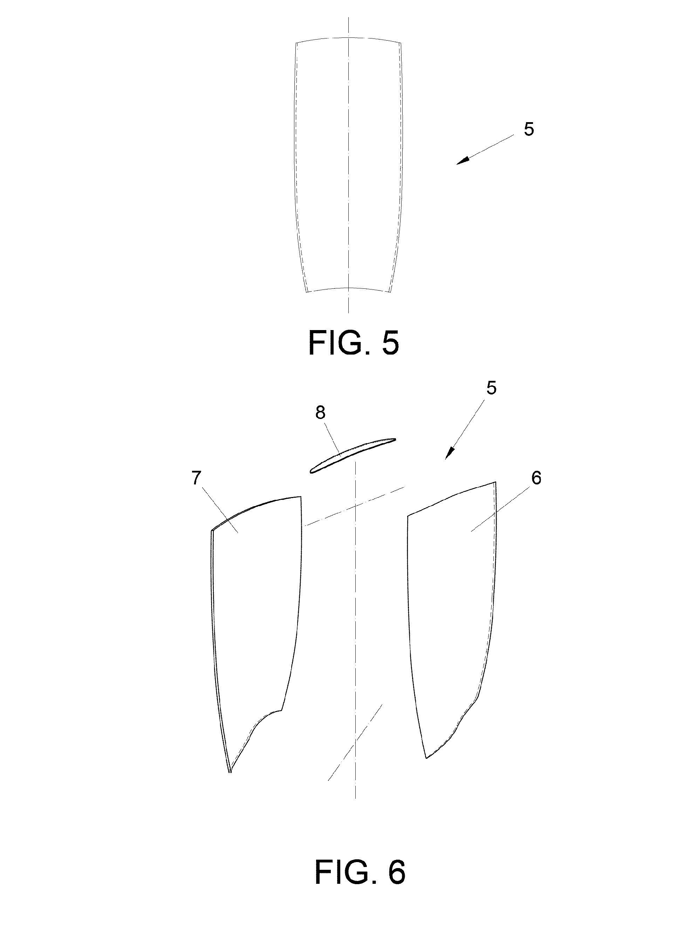

As shown in figures 5 and 6, the vanes (5) are formed by the attachment, by welding, of stamped pieces. Specifically, by means of the welding of a first plate (6), which shall act as the impeller surface, and a second plate (7), which shall act as the impeller surface. The stamping of the different pieces of the vane provides the same with its aerodynamic shape. In addition, an intermediate piece (8) between the upper ends of the first and second plate that is welded in order to close the hollow in the upper part of the vane (5) and provide further strength to the welding is used. In order to carry out this stamping, the use of dies is required, and the forming process of the different pieces can vary depending on the profile used in each vane. In symmetrical profile vanes, the same piece is used regardless of the surface of the vane. In asymmetrical profile vanes, the surfaces are different, depending on the pressure or suction surface. These stamped pieces shall have, in a particular embodiment of the invention, a thickness of 1.5 mm, there being a hollow space between them, after they have been welded, of approximately 7 mm. The vane set (15) has a length, in its upper profile, of 11 centimeters and a length of 23 cm. It is more than obvious that a piece with the aforementioned dimensions and with the hollow existing in the interior of the vane achieves important savings in terms of material, and therefore in weight, in addition to supposing important savings in terms of cost.

Once the desired shape is achieved, the vanes (5) are attached to the core. This attachment to the core is achieved by means of the welding of the vanes (5) to the outer surface of the outer enclosure (2). This placement must be precise and similar in all vanes (5). To achieve the foregoing assembly templates are used, with which the correct positioning of all the vanes (5) is accomplished. In the first place, the vanes (5) are cut along their lower part by means of three-dimensional laser cutting, a cut that depends on the angle that the vanes must have in the impeller to provide the propulsion specified for each fan model, in order for the lower part of the vane to perfectly match the exterior cylindrical enclosure of the core.

The manufacturing range of these impellers (1) comprises ø500 mm to ø1,600 mm of outer measurement. The number of vanes (5) and the diameter of the core is determined not only by the outer diameter but by the power for which they are manufactured.

The preferred manufacturing powers of the impellers are preferably comprised between 7.5 kW and 90 kW, although the method and impeller described herein can lead to greater and lower powers than those comprised in the aforementioned range.

With the purpose of avoiding problems related to type, resonances, vibrations or noise, the spaces among inner elements or hollows can be filled with foam, wool or any other insulating material.

## Claims

1. Fan impeller comprising a central stump on which the impeller is affixed to a shaft of a motor, **characterized in that** it comprises:
• an exterior cylindrical enclosure located concentrically to the central stump;
• at least two attachment discs, the central stump and the exterior enclosure being attached by means of the affixing of an inner edge of each disc to the outer surface of the stump and the affixing of the outer edge of each disc to the inner surface of the outer enclosure; and
• a plurality of vanes affixed to the outer surface of the exterior enclosure and equidistantly located, the vanes being formed by at least two previously formed plates, which correspond to the impeller surface and the suction surface of the vane, being welded to each other along at least 3 of their edges, leaving a hollow space in their interior, and comprising that the vanes are welded along the lower open profile to the outer surface of the exterior enclosure.

2. Fan impeller, according to claim 1, **characterized in that** it comprises that the plates are equal when the vane is symmetrical and that the plates are different when the vane is asymmetrical.

3. Fan impeller, according to any one of the preceding claims, **characterized in that** the impeller is made of stainless steel.

4. Fan impeller, according to any one of the preceding claims, **characterized in that** the affixing of the central stump, the outer enclosure and the at least two attachment discs is carried out by welding.

5. Method for producing a fan impeller, the fans preferably being located on the ceilings of road tunnels, according to claim 1, **characterized in that** it comprises the following steps:
vi) calculating the dimensions of the outer enclosure, of the central stump, of the at least two attachment discs, the number of vanes and an aerodynamic profile of each vane depending on the needs required;
vii) stamping at least two plates, giving both plates a concave shape to form each vane;
viii) welding the at least two plates along their upper end and along their lateral ends, leaving a hollow space in the interior of the welded volume;
ix) placing the vanes on the outer surface of the exterior enclosure by means of assembly elements positioning the vanes; and
x) equidistantly welding each one of the vanes along their lower edge to the outer surface of the exterior enclosure of the impeller.

6. Method for producing a fan impeller according to claim 5, **characterized in that** in step iii) an intermediate piece is used in the welding of the upper ends of both plates.

7. Method for producing a fan impeller according to claim 5, **characterized in that** the assembly elements are selected among positioners, templates, and a combination thereof.
